# EUROPÄISCHE PATENTSCHRIFT

(11) **EP 0 766 800 B1**
(45) Veröffentlichungstag und Bekanntmachung des Hinweises auf die Patenterteilung: **16.09.1998**
(21) Anmeldenummer: 95923243.0
(22) Anmeldetag: 07.06.1995
(51) Int. Cl.: F16K 17/38

(54) **THERMISCHE ARMATURENSICHERUNG ZUM AUTOMATISCHEN ABSPERREN VON LEITUNGEN**
THERMAL SAFETY FITTING FOR AUTOMATICALLY SHUTTING DOWN FLUID LINES
SOUPAPE DE SURETE THERMIQUE POUR FERMETURE AUTOMATIQUE DE CANALISATIONS

(30) Priorität: 24.06.1994 DE 4422241
(43) Veröffentlichungstag der Anmeldung: 09.04.1997
(73) Patentinhaber: Mertik Maxitrol GmbH & Co. KG, 06502 Thale (DE)
(72) Erfinder: SCHULZE, Klaus, D-06507 Gernrode (DE)
(74) Vertreter: Albrecht, Günter
(86) Internationale Anmeldenummer: EP9502175
(87) Internationale Veröffentlichungsnummer: WO9600357

(56) Entgegenhaltungen:
- WO-A-93/06397

## Beschreibung

### Technisches Gebiet

Die Erfindung betrifft eine thermische Armaturensicherung zum automatischen Absperren von Leitungen, insbesondere von Gasleitungen, beim Auftreten einer unzulässigen Temperaturerhöhung nach dem Oberbegriff des ersten Patentanspruches.

### Stand der Technik

Solche thermischen Armaturensicherungen, die in Rohrleitungen, wie zum Beispiel vor Gasarmaturen, Gasgeräten, Gaszählern usw., eingesetzt werden, gibt es in einer Vielzahl von Ausführungen. Sie dienen dazu, bei einer Temperaturerhöhung die Gaszufuhr zu unterbrechen, bevor die Temperatur an den genannten Gasgeräten so hoch wird, daß deren äußere Dichtheit gefährdet ist.

So ist aus der WO 93/06397 ein sogenanntes Brandschutzventil und eine thermische Armaturensicherung gemäß Oberbegriff des Anspruchs 1 mit Schließfeder zum automatischen Absperren von Leitungen bekannt. Bei diesem Brandschutzventil ist in einem Gehäuse ein metallischer Schließkörper angeordnet, der im Dichtungsbereich eine kugelförmige Gestalt besitzt, mit der er unter der Kraft einer Schließfeder in geöffneter Stellung auf drei Festpunkten, die durch zwei Kugeln und einem temperaturempfindlichen Bauelement gebildet werden, aufliegt. Dabei weisen die beiden Kugeln, die sich ihrerseits auf einem Absatz im Gehäuse abstützen, zueinander einen solchen Abstand auf, daß sie einen Öffnungswinkel von ca. 90° bilden. Gegenüber diesem Öffnungswinkel ist an der Innenwand des Gehäuses das temperaturempfindliche Bauelement befestigt.

Dieses besteht aus einem nach innen offenen Napf, der mit seinem Napfboden an der Innenwand befestigt ist. In dem radial nach innen offenen Napf befindet sich ein Schmelzlot, in das eine mit der Öffnung des Napfes eine Spielpassung bildende Kugel eingepreßt ist, die den dritten Festpunkt bildet, und die so bemessen ist, daß sie sich bei fehlendem Schmelzlot annähernd vollständig im Napf befindet. Der durch die drei Festpunkte gebildete Auflagedurchmesser für den metallischen Schließkörper ist dabei so bemessen, daß der Schließkörper, wenn sich die Kugel im Napf befindet, auf Grund der wirkenden Kraft der Schließfeder durch die zwischen den drei Festpunkten entstehende vergrößerte Öffnung hindurchgedrückt wird.

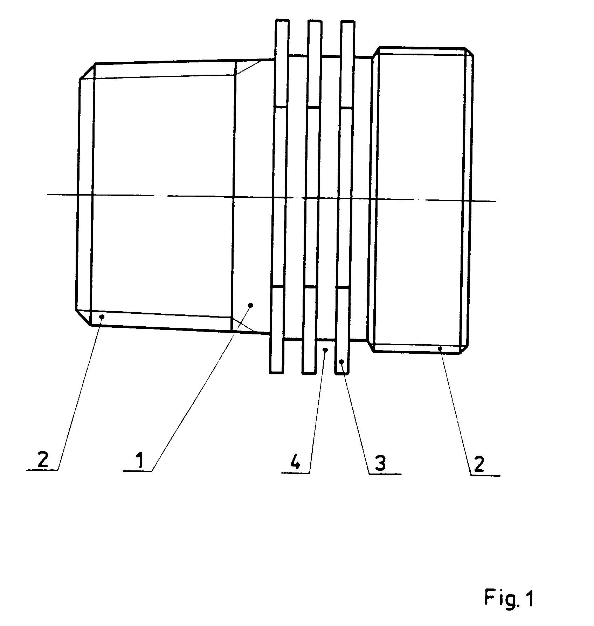

Wie auch aus der zugehörigen Figur 1 sehr gut zu erkennen ist, ist es bei dieser Lösung von Nachteil, daß der außermittig gelagerte Schließkörper bei der Durchführung der Schließbewegung nicht axial geführt ist. Wegen der auf Grund der vorhandenen Toleranzen niemals vollkommen axial wirkenden Kraftrichtung der Schließfeder kommt es bei der Schließbewegung der Kugel zu deren seitlicher Auslenkung. Der dadurch zwangsweise entstehende seitliche Aufprall und die damit notwendige Zentrierungsbewegung in den Sitz verbrauchen einen Teil der für die Erzielung eines Preßsitzes erforderlichen kinetischen Energie. Dieser Preßsitz ist jedoch erforderlich, wenn die thermische Armaturensicherung auch noch bei Temperaturen wirksam sein soll, bei denen die Schließfeder bereits kraftlos ist.

Eine ähnliche Lösung ist in der EP-OS 574 677 beschrieben. Bei dieser Sicherheitsgassteckdose ist innerhalb des Gehäuses ein Haltering gelagert, in oder an dem ein drehsymmetrisches Schließteil anliegt, dessen größter Außendurchmesser nur wenig größer ist als der Innendurchmesser des Halterings. Dabei wird das Schließteil durch ein Federelement gegen den Haltering in Richtung eines Dichtsitzes gedrückt. Der Haltering besteht aus einem Material, das bei einer vorgewählten, bestimmten Temperatur soweit erweicht, daß das Schließteil durch das Federelement durch den Haltering hindurchgedrückt wird und in Verbindung mit einem Sitz den Gasdurchfluß absperrt.

Obwohl bei dieser Lösung eine axiale Lagerung in der Offenstellung erreicht ist, kann es auf Grund der auch bei dieser Lösung fehlenden axialen Führung der Kugel bei der Schließbewegung nicht verhindert werden, daß es wie bei der weiter oben beschriebenen Lösung zu einer seitlichen Auslenkung des Schließkörpers kommen kann mit dem bereits genannten Nachteil.

Aus dem DE-GM 90 17 534 ist eine weitere thermische Armaturensicherung gemäß dem Oberbegriff des Anspruchs 1 mit demselben Nachteil bekannt. Bei dieser ist im Gehäuse ein mit einem Haltebolzen gegen eine Druckfeder vorgespannter Schließkegel angeordnet. Während der Haltebolzen mit seinem ersten Ende am Schließkegel befestigt ist, stützt er sich mit seinem zweiten Ende, dessen Durchmesser vergrößert ist, auf einem Schmelzkörper ab, durch dessen mittige Öffnung der Haltebolzen hindurchragt.

Eine im Aufbau ähnliche Vorrichtung zum Absperren von Leitungen, die in der DE-OS 39 16 100 beschrieben ist, versucht diesem Nachteil dadurch zu begegnen, daß der Haltebolzen mittels eines separaten Führungsteiles mittig gehalten wird. Hierbei ist es von Nachteil, daß neben dem zusätzlichen Bauteil ein hoher Fertigungsaufwand getrieben werden muß. Um eine ausreichende Führung zu gewährleisten erhöht sich außerdem die Baugröße.

### Darstellung der Erfindung

Der Erfindung liegt das Problem zugrunde, eine thermische Armaturensicherung der genannten Art zu entwickeln, bei der die Schließbewegung des Schließkörpers axial zum Sitz geführt wird. Dabei darf die Führung nur einen minimalen Strömungswiderstand verursachen. Der Herstellungsaufwand und die Baugröße sind so gering wie möglich zu halten.

Erfindungsgemäß wird das Problem dadurch gelöst, daß im Gehäuse in axialer Verlängerung eines in ihm befindlichen Sitzes ein Schließkörper durch mindestens ein etwa U-förmig gebogenes Formteil in der Offenstellung gehalten ist. Der Schließkörper weist dazu im Anschluß an einen dem Sitz zugewandten Dichtungsbereich auf seiner dem Sitz abgewandten Seite eine Einschnürung auf, an die sich ein vorzugsweise zylindrischer Bund anschließt. Die beiden Schenkel des Formteiles befinden sich dabei im Bereich der Einschnürung und bilden so gegen die Kraft der Schließfeder eine Auflage für den Bund. Der die beiden Schenkel verbindende Teil des Formteiles stützt sich desweiteren an einem Thermolot ab, das seinerseits an der Innenwand des Gehäuses anliegt. Beim Wegschmelzen des Thermolotes befinden sich die Schenkel des Formteiles auf Grund der damit verbundenen Lageänderung des Formteiles im Gehäuse nicht mehr in der Einschnürung des Schließkörpers, so daß der Schließkörper unter der Einwirkung der Schließfeder seine Schließstellung einnimmt. Dabei bilden die Schenkel jeweils eine auf den Sitz gerichtete Führungsbahn für den Bund und/oder den Dichtungsbereich des Schließkörpers.

Damit wurde eine Lösung gefunden, mit der der bisherige Nachteil des Standes der Technik, die nicht genau axial verlaufende Schließbewegung des Schließkörpers beseitigt wurde, und die sich vor allen Dingen durch ihre Einfachheit auszeichnet.

Um eine gute Führung des Schließkörpers zu gewährleisten, können statt eines Formteiles zum Beispiel auch zwei gegenüberliegend angeordnete U-förmige Formteile zum Einsatz kommen. Dabei ist es bereits ausreichend, wenn sich nur ein Formteil zumindest teilweise am Thermolot abstützt, während das andere Formteil direkt an der Innenwand des Gehäuses anliegt. Weiterhin ist es möglich, eines der beiden U-förmigen Formteile durch ein sich ebenfalls an der Innenwand abstützendes 1-förmiges Formteil zu ersetzen, das dann selbstredend mittig gegenüber dem U-förmigen Fonnteil angeordnet ist. Auch kann eines der beiden Formteile zusätzlich eine Auflage für die Schließfeder aufweisen, oder die beiden Formteile können sogar einstückig miteinander verbunden sein, wobei der Verbindungssteg dann gleichzeitig als Auflage für die Schließfeder dient.

Weitere vorteilhafte Ausgestaltung der Erfindung gehen aus den anderen Patentansprüchen hervor. So erweist es sich als besonders vorteilhaft, wenn das den Schließkörper in der Offenstellung haltende Formteil durch eine etwa U-förmig gebogene Spange gebildet wird. Die beiden federnden Schenkel der Spange, die sich ansonsten mit ihren radial nach außen abgewinkelten Enden gegen die Innenwand des Gehäuses abstützen, befinden sich dabei teilweise im Bereich der Einschnürung. Beim Wegschmelzen des Thermolotes spreizen sich die Schenkel der Spange auf Grund der mit der Durchmesservergrößerung verbundenen Lageänderung so weit auf, daß der Schließkörper unter der Einwirkung einer Schließfeder seine Schließstellung einnimmt.

Damit die Baugröße der thermischen Armaturensicherung noch zusätzlich verringert werden kann, sollte sich desweiteren die Schließfeder, wie bereits weiter oben ausgeführt wurde, mit ihrer dem Schließkörper abgewandten Seite auf dem Formteil beziehungsweise der Spange abstützen.

Eine besonders günstige Lösung ergibt sich, wenn im Gehäuse zusätzlich zu dem U-förmig gebogenen Formteil ein vorzugsweise aus Flachblech bestehendes L-förmiges Formteil angeordnet ist. Dabei stützt sich an dessem einen Schenkel, der sich seinerseits an einem Absatz des Gehäuses abstützt, die Schließfeder ab, während der andere Schenkel eine weitere auf den Sitz gerichtete Führungsbahn für den Schließkörper bildet.

Weiterhin erweist es sich als vorteilhaft, wenn der Schließkörper auf seiner dem Sitz abgewandten Seite eine Ausdrehung aufweist, die die Schließfeder in gespannter Lage fast vollständig aufnimmt. Dabei sollte günstigerweise die Tiefe der Ausdrehung so festgelegt sein, daß sich die zur Abstützung der Schließfeder dienende Stirnfläche der Ausdrehung im Bereich des am äußeren Umfang des Schließkörpers befindlichen Dichtungsbereiches befindet. Dadurch, daß sich der Angriffspunkt der Schließfeder unterhalb des Haltebereiches der Spange befindet, wird vermieden, daß die insbesondere auf Grund herstellungsbedingter Toleranzen mögliche Schiefstellung der Schließfeder auch zu einem Verkanten des Schließkörpers in der Offenstellung und damit zu einer zusätzlichen negativen Beeinflussung des Abdichtvorganges führt. Weiterhin ist es mit der weitestgehenden Aufnahme der Schließfeder in der Ausdrehung möglich, die Baulänge der thermischen Armaturensicherung zu verringern.

### Ausführungsbeispiel

Die Erfindung wird nachstehend an einem Ausführungsbeispiel näher beschrieben. Es zeigen:
- Fig. 1: eine erfindungsgemäße thermische Armaturensicherung
- Fig. 2: eine erfindungsgemäße thermische Armaturensicherung im Schnitt in Offenstellung
- Fig. 3: eine Ansicht der Fig. 2 im Schnitt A - A
- Fig. 4: die erfindungsgemäße thermische Armaturensicherung aus Fig. 2 im Schnitt in Schließstellung
- Fig. 5: eine Darstellung der Spange in der Ansicht B aus Fig. 3

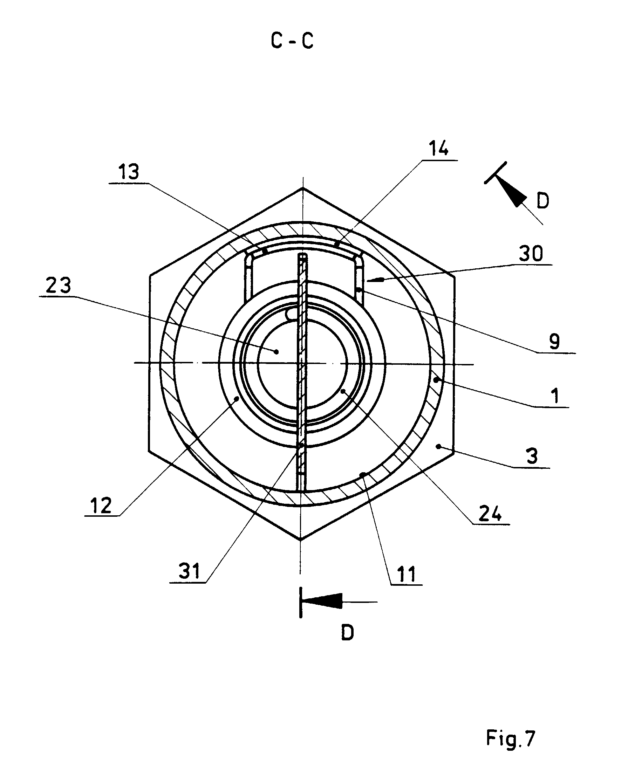

- Fig. 6: eine weitere erfindungsgemäße thermische Armaturensicherung im Schnitt D - D aus Fig. 7 in Offenstellung
- Fig. 7: eine Ansicht der Fig. 6 im Schnitt C - C
- Fig. 8: die erfindungsgemäße thermische Armaturensicherung aus Fig. 6 im Schnitt D - D aus Fig. 7 jedoch in Schließstellung

Die nachfolgend näher erläuterte und in der Figur 1 dargestellte erfindungsgemäße thermische Armaturensicherung besitzt ein rohrförmiges Gehäuse 1, das an beiden Enden jeweils einen Anschluß aufweist, der in diesem Fall jeweils durch ein Außengewinde dargestellt ist. Es versteht sich von selbst, daß auch ein anderer Anschluß möglich ist. Zwischen den beiden Anschlußgewinden 2 weist das Gehäuse 1 einen äußeren Sechskant 3 auf, der beim Einbauen in eine nicht dargestellte Gasleitung zur Aufnahme eines Schraubenschlüssels oder eines ähnlichen Werkzeuges dient. Um die Oberfläche des Sechskantes 3 zu vergrößern, ist der Sechskant 3, der zusätzlich auch noch schwarz eingefärbt ist, weiterhin mit umlaufenden Rillen 4 versehen, damit eine möglichst gute Wärmeleitung in das Innere der thermischen Armaturensicherung erreicht wird.

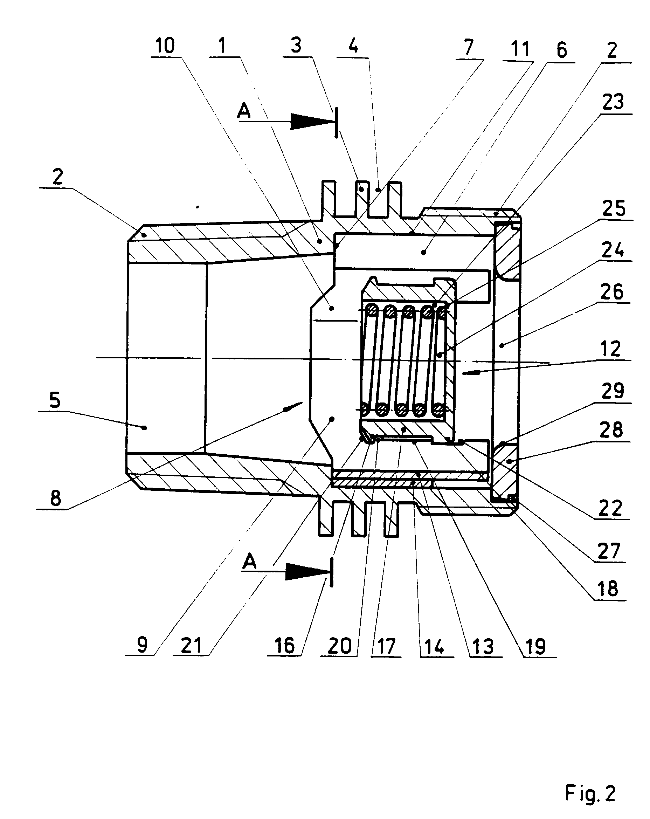

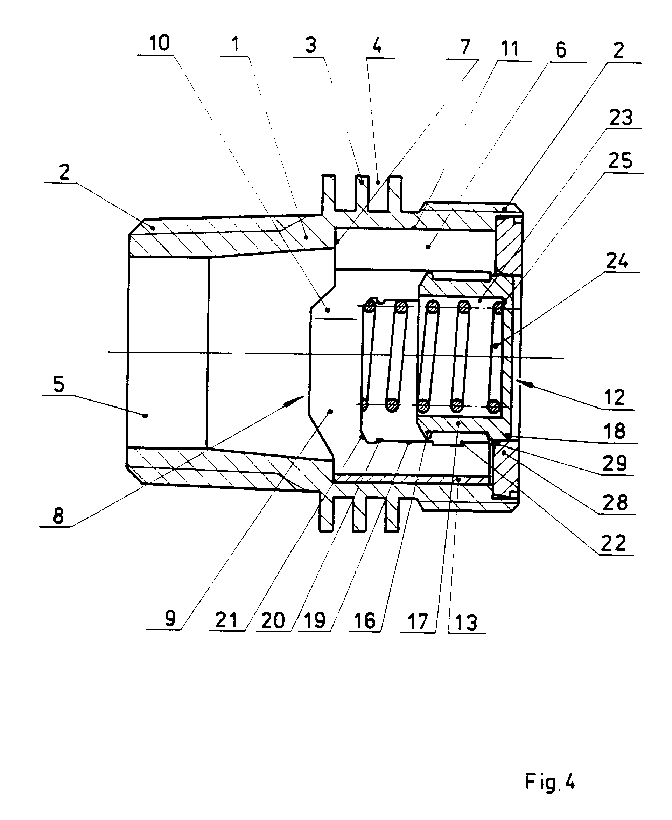

Die in Figur 1 gezeigte thermische Armaturensicherung ist in Figur 2 nunmehr im Schnitt in Offenstellung dargestellt.

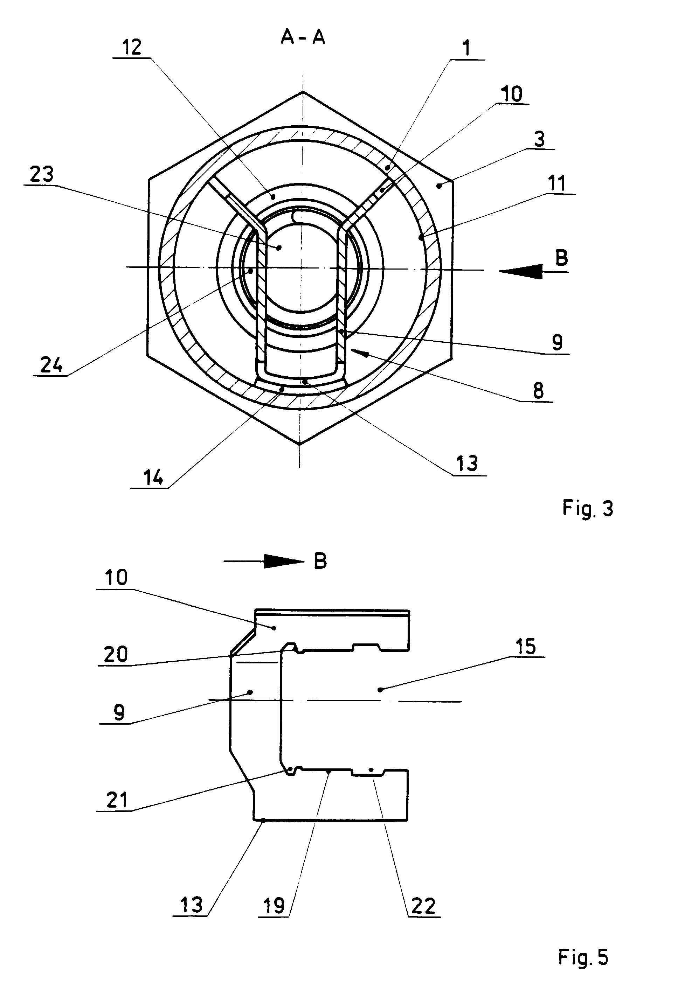

In Verlängerung der sich aus strömungstechnischen Gründen erweiternden Einströmöffnung 5 schließt sich im Gehäuse 1 eine rohrförmige Erweiterung 6 an. An dem durch die Einströmöffnung 5 und die Erweiterung 6 gebildeten ersten Absatz liegt eine etwa U-förmig gebogene Spange 8 an, die mit ihren beiden Schenkeln 9, die vorzugsweise radial abgewinkelte Enden 10 aufweisen, federnd gegen die Innenwand 11 des Gehäuses 1 aufgespreizt ist (Fig. 3). Dabei ist günstigerweise für die beiden abgewinkelten Enden 10 ein Öffnungswinkel von etwa 90° gewählt. Die Spange 8 ist als Biegeteil aus Blech ausgeführt, dessen Flächen parallel zur in Strömungsrichtung liegenden Gehäuseachse und damit auch parallel zur Innenwand 11 des Gehäuses 1 verlaufen. Damit wird durch die Spange 8 nur ein minimaler Strömungswiderstand erzeugt. Auf den beiden Schenkeln 9 der Spange 8 stützt sich eine axial im Gehäuse 1 angeordnete Schließfeder 24 ab, die ansonsten in einen weiter unten noch näher zu erläuternden Schließkörper 12 hineinragt. Zwischen dem die beiden Schenkel 9 verbindenden starren Teil 13 der Spange 8 und der Innenwand 11 befindet sich ein streifenförmiges, aus einem Thermolot 14 bestehendes Formteil; das durch die Spange 8 gegen die Innenwand 11 gepreßt wird.

Wie aus Figur 5 zu erkennen ist, weisen beide Schenkel 9 der Spange 8 eine in Strömungsrichtung offene etwa U-förmige Ausnehmung 15 auf. Dabei sind beide Ausnehmungen 15 symmetrisch zueinander angeordnet, wobei sich der Bereich der Biegekante jedes Schenkels 9 innerhalb der Ausnehmung 15 befindet. Durch die in Strömungsrichtung verlaufenden Seiten der Ausnehmung 15 wird ein in Längsrichtung des Gehäuses 1 beweglicher zylindrischer Schließkörper 12 geführt.

Der Schließkörper 12 weist an seinem der Einströmöffnung 5 zugewandten Ende einen umlaufenden Bund 16 auf, an den sich in Strömungsrichtung eine Einschnürung 17 anschließt. Am Ende des Schließkörpers 12 befindet sich ein in diesem Fall kugelförmiger Dichtungsbereich 18.

In der der Einströmöffnung 5 zugewandten Stirnseite ist der Schließkörper 12 mit einer Ausdrehung 23 zur Aufnahme der Schließfeder 24 versehen, die die Schließfeder 24 in gespannter Lage, d.h. in Offenstellung, fast vollständig aufnimmt, wobei die Tiefe der Ausdrehung 23 so festgelegt ist, daß sich die zur Abstützung der Schließfeder 24 dienende Stirnfläche 25 der Ausdrehung aufHöhe des am äußeren Umfang des Schließkörpers 12 befindlichen Dichtungsbereiches 18 befindet.

Die zur Führung des Schließkörpers 12 dienenden Seiten der Ausnehmungen 15 sind mit einer Kontur 19 versehen, die in die Einschnürung 17 des Schließkörpers 12 hineinragt. An der dadurch in Verbindung mit einem ersten Freischnitt 21 bei jeder Seite entstehenden Schulter 20 stützt sich der Bund 16 des Schließkörpers 12 ab. Ein in der Kontur 19 vorhandener zweiter Freischnitt 22 dient zur Aufnahme des Dichtungsbereiches 18 (Fig. 2).

Die im Gehäuse 1 in axialer Verlängerung der Einströmöffnung 5 befindliche Ausströmöffnung 26 weist eine Ausdrehung 27 auf, die zur Aufnahme, zum Beispiel mittels Preßpassung, eines ringförmigen Sitzes 28 dient. der in seiner axialen Öffnung eine mit dem Dichtungsbereich 18 des Schließkörpers 12 abgestimmte Dichtkontur 29 aufweist.

Die Wirkungsweise der erfindungsgemäßen thermischen Armaturensicherung ist wie folgt:

Beim Auftreten einer unzulässigen Temperaturerhöhung kommt es zum Schmelzen des Thermolotes 14. Damit drückt sich die auf Grund ihrer federnden Schenkel 9 unter Spannung stehende Spange 8 mit ihrem starren Teil 13 gegen die Innenwand 11 des Gehäuse 1. Durch das mit dieser Durchmesservergrößerung verbundene Aufspreizen der Spange 8 gleitet der Bund 16 des Schließkörpers 12 von den Schultern 20 und wird durch die Kraft der Schließfeder 24 mit seinem kugelförmigen Dichtungsbereich 18 gegen die Dichtkontur 29 des Sitze 28 gedrückt.

Während der Schließbewegung wird der Schließkörper 12 durch die in den Schenkeln 9 der Spange 8 befindlichen Konturen 19 in axialer Richtung geführt, so daß radiale Auslenkungen und die damit verbundenen negativen Auswirkungen auf die Dichtwirkung vermieden werden. Die erreichte Schließstellung ist in Fig. 4 dargestellt.

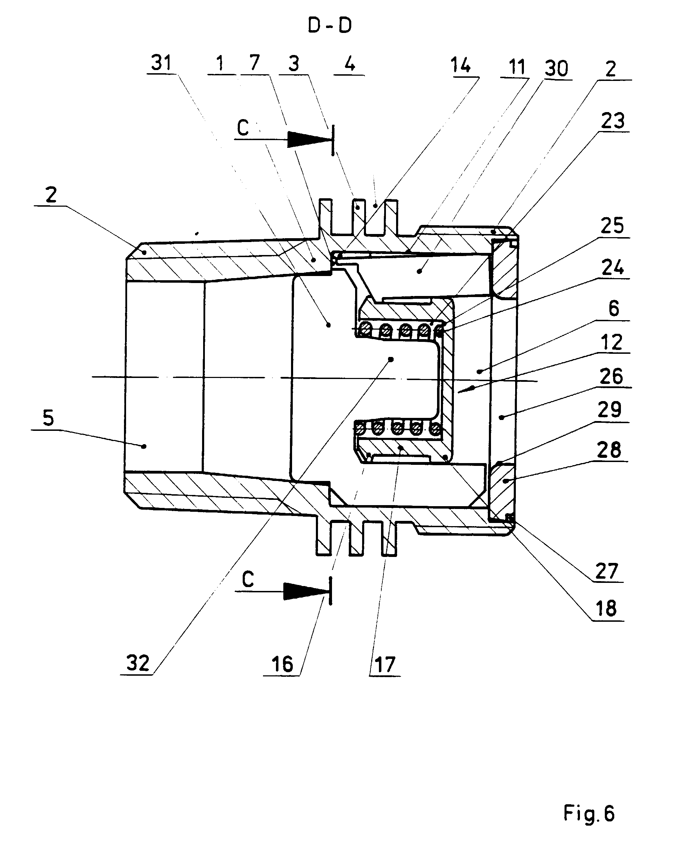

Fig. 6 zeigt eine veränderte Ausführung einer erfindungsgemäßen thermischen Armaturensicherung. Um den Schließkörper 12 in Offenstellung zu halten, befindet sich in der Erweiterung 6 ein etwa U-förmig gebogenes Formteil 30. Der die beiden Schenkel 9 verbindende Teil 13 des Formteiles 30 stützt sich mit seinem dem Absatz 7 zugewandten Ende an einem streifenförmigen und der Kontur der Innenwand 11 angepaßten Thermolot 14 ab, das seinerseits an der Innenwand 11 des Gehäuses 1 anliegt, während der die beiden Schenkel 9 verbindende Teil 13 des Formteiles sich mit seinem dem Sitz 28 zugewandten Ende direkt an der Innenwand 11 abstützt. Auf Grund der damit gegenüber der Längsachse des Gehäuses 1 leicht geneigten Stellung des U-förmigen Formteiles 30 befinden sich die beiden Schenkel 9 des Formteiles 30 dabei teilweise im Bereich der Einschnürung 17 des Schließkörpers 12, wobei sie gleichzeitig unter leichter Vorspannung am Dichtungsbereich 18 des Schließkörpers 12 anliegen.

Mittig gegenüber dem U-förmigen Formteil 30 stützt sich ein weiteres L-förmiges Formteil 31 mit seinem einen Schenkel an der Innenwand 11 ab, während sich der andere Schenkel am Absatz 7 abstützt. Dieser Schenkel, der vorzugsweise teilweise in die Einströmöffnung 5 hineinragt und in dieser durch einen leichten Preßsitz gehalten wird, besitzt auf seiner dem Schließkörper 12 zugewandten Seite eine Zunge 32, die in Offenstellung in die Ausdrehung 23 des Schließkörpers 12 hineinragt und eine Führung für die Schließfeder 24 bildet.

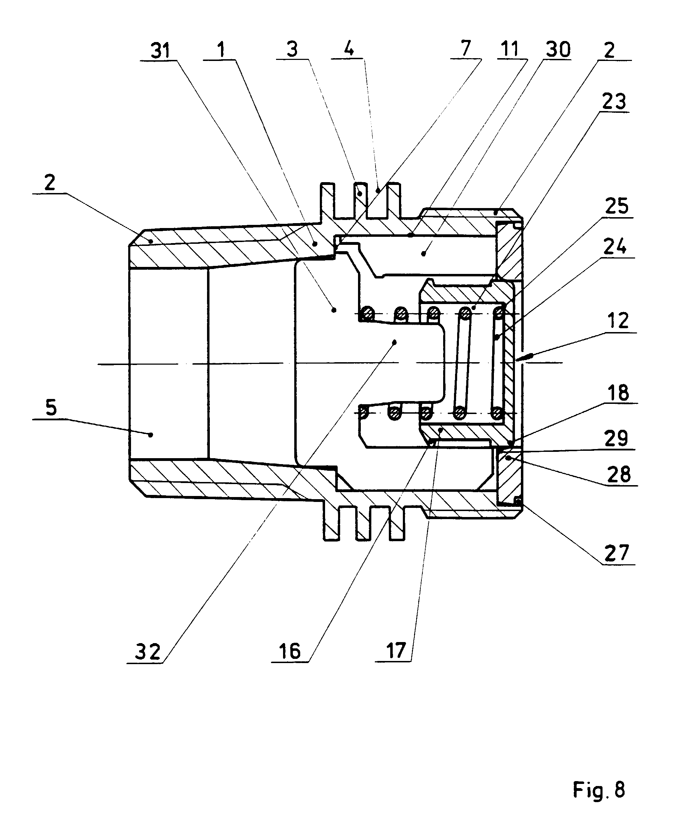

Beim erfolgten Wegschmelzen des Thermolotes 14 befinden sich die Schenkel 9 des Formteiles 30 auf Grund der damit verbundenen Lageänderung des Formteiles 30 nicht mehr in der Einschnürung 17 des Schließkörpers 12, sondern parallel zur Längsachse des Gehäuses 1, so daß der Schließkörper 12 unter der Einwirkung der Schließfeder 24 seine Schließstellung einnimmt (Fig. 8). Dabei bilden die Schenkel 9 des Formteiles 30 und der sich an der Innenwand 11 abstützende Schenkel des Formteiles 31 eine Führungsbahn für den Bund 16 und den Dichtungsbereich 18 des Schließkörpers 12.

Die erfindungsgemäße Armaturensicherung ist selbstredend nicht auf die dargestellten Ausführungsbeispiele beschränkt. Vielmehr sind Änderungen und Abwandlungen möglich, ohne den Rahmen der Erfindung zu verlassen. So können beispielsweise die mit Außengewinde dargestellten Anschlüsse auch Innengewinde oder einen Flansch aufweisen. Ferner kann der kugelförmige Dichtungsbereich 18 auch zum Beispiel kegelförmig ausgeführt sein. Weiterhin kann die Anzahl und die Ausbildung der Formteile 30/31 verändert beziehungsweise anders kombiniert werden, zum Beispiel können auch zwei gegenüberliegend angeordnete U-förmige Formteile 30 zum Einsatz kommen. Dabei ist es auch möglich nicht nur ein Thermolot 14 zu verwenden.

### Aufstellung der Bezugszeichen

- 1: Gehäuse
- 2: Anschlußgewinde
- 3: Sechskant
- 4: Rille
- 5: Einströmöffnung
- 6: Erweiterung
- 7: Absatz
- 8: Spange
- 9: Schenkel
- 10: abgewinkeltes Ende
- 11: Innenwand
- 12: Schließkörper
- 13: Teil
- 14: Thermolot
- 15: Ausnehmung
- 16: Bund
- 17: Einschnürung
- 18: Dichtungsbereich
- 19: Kontur
- 20: Schulter
- 21: erster Freischnitt
- 22: zweiter Freischnitt
- 23: Ausdrehung im Schließkörper
- 24: Schließfeder
- 25: Stirnfläche
- 26: Ausströmöffnung
- 27: Ausdrehung der Ausströmöffnung
- 28: Sitz
- 29: Dichtkontur
- 30: Formteil (U-förmig)
- 31: Formteil (L-förmig)
- 32: Zunge

## Patentansprüche

1. Thermische Armaturensicherung zum automatischen Absperren von Leitungen, insbesondere von Gasleitungen, beim Auftreten einer unzulässigen Temperaturerhöhung, mit einem in einem Gehäuse (1) befindlichen metallischen Schließkörper (12), wobei der Schließkörper (12) unter der Kraft einer in Schließrichtung wirkenden Schließfeder (24) mittels eines Thermolotes (14) in Offenstellung gehalten wird, dadurch gekennzeichnet, daß im Gehäuse (1) in axialer Verlängerung eines in ihm befindlichen Sitzes (28) der Schließkörper (12), der im Anschluß an einen dem Sitz (28) zugewandten Dichtungsbereich (18) auf seiner dem Sitz (28) abgewandten Seite eine Einschnürung (17) aufweist, an die sich ein Bund (16) anschließt, durch mindestens ein etwa U-förmig gebogenes Formteil (30) in der Offenstellung gehalten ist, indem die beiden Schenkel (9) des Formteiles (30) sich im Bereich der Einschnürung (17) befinden und so gegen die Kraft der Schließfeder (24) eine Auflage für den Bund (16) bilden, und daß sich der die beiden Schenkel (9) verbindende Teil (13) des Formteiles (30) an dem Thermolot (14) abstützt, das seinerseits an der Innenwand (11) des Gehäuses (1) anliegt, und daß sich die Schenkel (9) des Formteiles (30) beim Wegschmelzen des Thermolotes (14) auf Grund der damit verbundenen Lageänderung des Formteiles (30) im Gehäuse (1) nicht mehr in der Einschnürung (17) des Schließkörpers (12) befinden, so daß der Schließkörper (12) unter der Einwirkung der Schließfeder (24) seine Schließstellung einnimmt, wobei die Schenkel (9) jeweils eine auf den Sitz (28) gerichtete Führungsbahn für den Bund (16) und/oder den Dichtungsbereich (18) des Schließkörpers (12) bilden.

2. Thermische Armaturensicherung zum automatischen Absperren von Leitungen nach Patentanspruch 1, dadurch gekennzeichnet, daß das den Schließkörper (12) in der Offenstellung haltende Formteil (30) durch eine etwa U-förmig gebogene Spange (8) gebildet wird, indem sich die beiden federnden Schenkel (9) der Spange (8), die sich ansonsten mit ihren radial nach außen abgewinkelten Enden (10) gegen die Innenwand (11) des Gehäuses (1) abstützen, teilweise im Bereich der Einschnürung (17) befinden, und daß sich die Schenkel (9) der Spange (8) beim Wegschmelzen des Thermolotes (14) auf Grund der damit verbundenen Lageänderung so weit aufspreizen, daß der Schließkörper (12) unter der Einwirkung der Schließfeder (24) seine Schließstellung einnimmt.

3. Thermische Armaturensicherung zum automatischen Absperren von Leitungen nach einem der Patentansprüche 1 oder 2, dadurch gekennzeichnet, daß sich die Schließfeder (24) mit ihrer dem Schließkörper (12) abgewandten Seite auf dem Formteil (30) beziehungsweise der Spange (8) abstützt.

4. Thermische Armaturensicherung zum automatischen Absperren von Leitungen nach Patentanspruch 1, dadurch gekennzeichnet, daß im Gehäuse (1) zusätzlich zu dem U-förmig gebogenen Formteil (30) ein vorzugsweise aus Flachblech bestehendes L-förmiges Formteil (31) angeordnet ist, wobei sich an dessem einen Schenkel, der sich seinerseits an einem Absatz (7) des Gehäuses (1) abstützt, die Schließfeder (24) abstützt, während der andere Schenkel eine weitere auf den Sitz (28) gerichtete Führungsbahn für den Schließkörper (12) bildet.

5. Thermische Armaturensicherung zum automatischen Absperren von Leitungen nach einem der Patentansprüche 1 bis 4, dadurch gekennzeichnet, daß der Schließkörper (12) auf seiner dem Sitz (28) abgewandten Seite eine Ausdrehung (23) aufweist, die die Schließfeder (24) in gespannter Lage fast vollständig aufnimmt, wobei die Tiefe der Ausdrehung (23) so festgelegt ist, daß sich die zur Abstützung der Schließfeder (24) dienende Stirnfläche (25) der Ausdrehung (23) im Bereich des am äußeren Umfang des Schließkörpers (12) befindlichen Dichtungsbereiches (18) befindet.

## Claims

1. Thermal safety device for automatically sealing conduits, especially gas conduits, when undue temperature rises occur with a metal closure body (12) found in housing (1), whereby closure body (12) is held in the open position by a meltable body (14) due to the force of locking spring (24) in the closure direction, characterized by this means in that the closure body (12), located in the seat (28) in the axial extension of housing (1), has a notch (17) on its side averted from seat (28) in connection with the sealing area (18) facing seat (28), on which a collar (16) is connected, is held in the open position by at least one somewhat U-shaped bent component (30), in which the two shanks (9) of the bent component are located in the notch (17) area and thus form a seat for collar (16) against the force of locking spring (24), and that the connecting part (13) of bent component (30) for the two shanks (9) is supported on meltable body (14), which itself lies on the inner wall (11) of housing (1), and that when the meltable body (14) melts away, the shanks (9) of the bent component (30) are no longer found in notch (17) of closure body (12) due to the thereby corresponding change of position of bent component (30) in housing (1), so that closure body (12) takes up its closed position due to the effect of locking spring (24), whereby the shanks (9) each form a guide-way directed at seat (28) for collar (16) and/or sealing area (18) of closure body (12).

2. Thermal safety device for automatically sealing conduits according to patent claim 1, characterized by this means in that the bent component (30) holding closure body (12) in the open position is formed by a somewhat U-shaped clip (8), in which the two sprung shanks (9) of clip (8), which otherwise are supported by their outward radially angular ends (10) against inner wall (11) of housing (1), are found partly in the notch (17) area, and that when the meltable body (14) melts away, the shanks (9) of clip (8) splay out, due to the thereby corresponding change of position, so far that the closure body (12) takes up its closed position due to the effect of locking spring (24).

3. Thermal safety device for automatically sealing conduits according to patent claims 1 or 2, characterized by this means in that locking spring (24) with its side averted from closure body (12) is supported on bent component (30) or clip (8).

4. Thermal safety device for automatically sealing conduits according to patent claim 1, characterized by this means in that a L-shaped bent component (31), preferably made of flat-plate, is arranged in housing (1) in addition to the U-shaped bent component (30), whereby one of its shanks, which is itself lies on seat (7) of housing (1), supports locking spring (24), whilst the other shank forms a further guide-way for closure body (12) directed at seat (28).

5. Thermal safety device for automatically sealing conduits according to patent claims 1 to 4, characterized by this means in that closure body (12) has a recess (23) on its side averted from seat (28), which almost completely accommodates locking spring (24) in its tensioned position, whereby the depth of recess (23) is determined such that the transverse plane (25) of the recess, serving as a support for locking spring (24), is located at the level of the sealing area (18) found at the external circumference of closure body (12).

## Revendications

1. Dispositif de sécurité thermique pour robinets destiné à l'arrêt automatique de conduites, notamment de conduites de gaz, lorsqu'il se produit une augmentation de température inacceptable, et muni d'un corps de fermeture (12) métallique se trouvant dans un boîtier (1), le corps de fermeture (12) étant maintenu en position ouverte à l'aide d'un alliage d'apport fusible (14) sous la force d'un ressort de fermeture (24) agissant dans le sens de fermeture, **caractérisé par le fait que** le corps de fermeture (12) situé dans le boîtier (1) dans le prolongement axial d'un logement (28) se trouvant à l'intérieur de celui-ci et présentant, sur sa face opposée au logement (28), un étranglement (17) se raccordant à un domaine d'étanchéité (18) tourné vers le logement (28) ainsi qu'à un collet (16) est maintenu en position ouverte par au moins un élément façonné (30) plié à peu près en U par le fait que les deux branches (9) de l'élément façonné (30) se trouvent dans le domaine de l'étranglement (17) et qu'elles forment ainsi un appui pour le collet (16) contre la force du ressort de fermeture (24), et **que** l'élément (13) de l'élément façonné (30) reliant les deux branches (9) s'appuie contre l'alliage d'apport fusible (14) qui est adjacent quant à lui à la paroi intérieure (11) du boîtier (1), et **que,** lorsque l'alliage d'apport fusible (14) fond, les branches (9) de l'élément façonné (30) ne se trouvent plus dans l'étranglement (17) du corps de fermeture (12) à cause du changement de position de l'élément façonné (30) provoqué de ce fait dans le boîtier (1) si bien que le corps de fermeture (12) reprend sa position fermée sous l'action du ressort de fermeture (24), les branches (9) formant chaque fois une glissière pour le collet (16) orientée vers le logement (28) et/ou le domaine d'étanchéité (18) du corps de fermeture (12).

2. Dispositif de sécurité thermique pour robinets destiné à l'arrêt automatique de conduites selon la revendication 1, **caractérisé par le fait que** l'élément façonné (30) maintenant le corps de fermeture (12) en position ouverte est formé par une agrafe (8) pliée à peu près en U par le fait que les deux branches (9) élastiques de l'agrafe (8), s'appuyant du reste avec leurs extrémités (10) développées radialement vers l'extérieur contre la paroi intérieure (11) du boîtier (1), se trouvent en partie dans le domaine de l'étranglement (17) et **que,** lorsque l'alliage d'apport fusible (14) fond, les branches (9) de l'agrafe (8) s'écartent tellement à cause du changement de position provoqué de ce fait que le corps de fermeture (12) reprend sa position fermée sous l'action du ressort de fermeture (24).

3. Dispositif de sécurité thermique pour robinets destiné à l'arrêt automatique de conduites selon l'une des revendications 1 ou 2, **caractérisé par le fait que** le ressort de fermeture (24) s'appuie avec sa face opposée au corps de fermeture (12) sur l'élément façonné (30) et l'agrafe (8) respectivement.

4. Dispositif de sécurité thermique pour robinets destiné à l'arrêt automatique de conduites selon la revendication 1, **caractérisé par le fait qu'**un élément façonné (31) en forme de L se composant de préférence de tôle plate est disposé dans le boîtier (1) en plus de l'élément façonné (30) plié en U, le ressort de fermeture (24) s'appuyant à l'une des branches de celui-ci qui s'appuie quant à elle contre un talon (7) du boîtier (1) alors que l'autre branche forme une autre glissière pour le corps de fermeture (12) orientée vers le logement (28).

5. Dispositif de sécurité thermique pour robinets destiné à l'arrêt automatique de conduites selon l'une des revendications 1 à 4, **caractérisé par le fait que** le corps de fermeture (12) présente sur sa face opposée au logement (28) un alésage (23) qui réceptionne presque complètement le ressort de fermeture (24) lorsque ce dernier est tendu, la profondeur de l'alésage (23) étant définie de telle façon que la surface frontale (25) de l'alésage (23) servant à appuyer le ressort de fermeture (24) se trouve dans le domaine du domaine d'étanchéité (18) situé sur le pourtour extérieur du corps de fermeture (12).
